# EUROPEAN PATENT APPLICATION

(11) **EP 1 659 616 A2**
(43) Date of publication of application: **24.05.2006**
(21) Application number: 05107771.7
(22) Date of filing: 24.08.2005
(51) Int. Cl.: H01J 61/30, G02F 1/13357

(54) **Surface light source unit for a display apparatus**

(30) Priority: 10.09.2004 KR 2004072567
(71) Applicant: Samsung Electronics Co, Ltd, Suwon-si, Gyeonggi-do 442-742 (KR)
(72) Inventor: Park, Cheol-jin, Gyeonggi-do (KR); Jang, Hyeon-yong, Gyeonggi-do (KR); Lee, Ki-yeon, Gyeonggi-do (KR)
(74) Representative: Read, Matthew Charles

(57) **Abstract**

A surface light source unit 210 for a LCD display device includes a plasma discharge portion 140 together with first and second electrodes 100, 102 arranged to apply an electric field to the discharge portion 140. In order to avoid dark portions, caused by obscuration of the discharge portion 140 by the second outer electrode 102, a secondary light generation means 602, or frit, is disposed on a substrate 112, at a position overlapping the second electrode 102. In response to incident light, generated within the discharge portion 140, the secondary light generation means 602 produces secondary electrons, increasing the number of electrons in its vicinity and resulting in the production of secondary light. This enhances the light output of the surface light source unit 210, reduces the effect of dark portions and improves uniformity. A further secondary light generation means 600 may be provided on the first substrate 110.

## Description

The present general inventive concept relates to a surface light source unit and a display apparatus having the same.

Generally, a liquid crystal display (LCD) device is a flat display device that precisely controls a liquid crystal to display data processed by a data processor, in the form of text, images and moving pictures. Unlike display devices having light emitting capabilities, such as a cathode ray tube, the LCD device requires a separate light source unit. A one-dimensional light source, e.g., a light-emitting diode (LED), or a two dimensional light source, e.g., a cold cathode fluorescent lamp (CCFL), is used as the light source unit. However, since both the light-emitting diode and the cold cathode fluorescent lamp typically have low spatial luminance uniformity, an optical member, such as a diffusion sheet or a prism sheet, is required in order to produce a uniform light output.

However, the use of such an optical member may result in light loss. For this reason, a light source unit comprising LEDs and CCFLs can suffer from a low light efficiency. Moreover, the structure of such a light source unit may be complicated, resulting in high production costs.

In an attempt to solve the problems described above, a surface light source unit that directly emits light from a surface thereof has been developed. The surface light source unit includes a surface light source body, divided into a plurality of discharge portions, and outer electrode portions provided on a top surface and a bottom surface and at both ends of the surface light source body to apply a discharge voltage thereto. In such a surface light source unit, the discharge voltage externally applied to the outer electrode portions causes a plasma discharge in each of the discharge portions. The plasma discharge produces ultraviolet rays. The ultraviolet rays are converted into visible rays by a fluorescent layer deposited on an inner wall of the surface light source unit (i.e., inside the discharge portions).

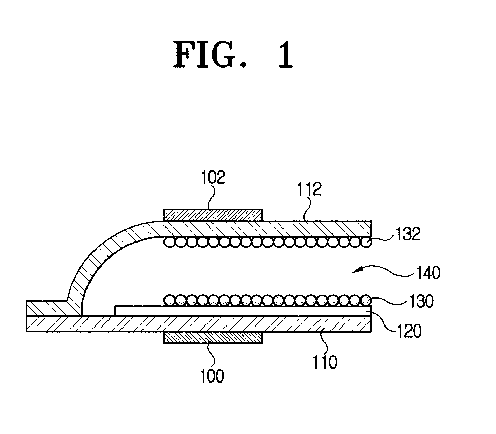

Figure 1 illustrates a conventional surface light source unit 140. The conventional surface light source unit 140 includes a first outer electrode portion 100, a second outer electrode portion 102, a first substrate 110, a second substrate 112, a first fluorescent layer 130, a second fluorescent layer 132, and a reflecting layer 120. The first outer electrode portion 100 is deposited on a bottom surface of the first substrate 110 while the second outer electrode portion 102 is deposited on a top surface of the second substrate 112. The reflecting layer 120 is deposited on a top surface of the first substrate 110 opposite the first outer electrode portion 100, and the first fluorescent layer 130 is deposited on the reflecting layer 120. The second fluorescent layer 132 is deposited on a bottom surface of the second substrate 112 opposite the second outer electrode portion 102.

The first substrate 110 and the second substrate 112 are formed of glass. However, glass has a drawback in that it has a low secondary electron emission coefficient and decreases light efficiency during the discharge. In other words, since a light source is required to generate light using a small amount of energy, a high efficiency is required when converting power into light. Since the glass has a low secondary electron emission coefficient, it is difficult to obtain a desired amount of light when using glass in the first and second substrates 110 and 112.

Additionally, as shown in Figure 1, the surface light source unit 140 is partially covered by the outer electrode portions 100, 102. Therefore, part of the light emitted from the surface light source body is blocked by the first and second outer electrode portions 100 and 102. For this reason, the surface light source unit 140 has a "dark portion" corresponding to the outer electrode portions 100 and 102, having a luminance that is lower than that of an unobscured light-emitting region of the surface light source unit 140. As a result of the dark portion, the surface light source unit 140 cannot provide a uniform luminance and the display quality of the LCD device is diminished.

It is an aim of the present invention to provide a surface light source unit and a display device having the same, which has an improved structure and minimizes the effects of a dark portion caused by an outer electrode portion of the surface light source unit.

According to a first aspect of the invention, a surface light source unit comprises a discharge portion formed between first and second substrates, first and second electrodes mounted on said first and second substrates respectively and arranged to apply a voltage to said discharge portion so as to cause a plasma discharge therein and at least one secondary light generation means provided within said discharge portion and arranged to respond to incident light generated within the discharge portion by causing the generation of secondary light, wherein one of said first and second electrodes and said secondary light generation means are located on opposite faces of one of the first and second substrates and the position of the secondary light generation means overlaps the position of the position of said one of said first and second electrodes.

For example, the secondary light generation means may respond to light generated within the discharge portion by emitting electrons, resulting in the generation of secondary light. As the electrons are generated in the region of the discharge portion that is obscured by one of the first and second electrodes, the effect of "dark portions" can be reduced, resulting in a light output having increased uniformity.

This aspect also provides a display apparatus comprising such a surface light source unit, together with a display panel, such as a LCD display panel.

According to a second aspect of the invention, a surface light source unit includes a first substrate and a second substrate, a discharge portion formed between the first substrate and the second substrate, a first outer electrode portion disposed on the first substrate outside the discharge portion to be supplied with power and a first frit disposed on the first substrate inside the discharge portion and opposite the first outer electrode portion. The discharge portion performs a discharge according to the power supplied to the first outer electrode portion.

The surface light source unit may further include a second frit disposed on the second substrate inside the discharge portion across from the first frit, a second outer electrode portion disposed on the second substrate outside the discharge portion and opposite the second frit, and a reflecting layer disposed between the first substrate and the first frit. The first and second frits may comprise PbO.
The first and second frits may further comprise an alkali metal oxide, such as MgO, BaO, CeO, and SrO. In addition, the first and second frits may have a thickness of 100 micrometers (µm) or less. The first and second frits may have one of a quadrangular structure, a straight line patterned structure and a one-dimensional repeated shape structure. The first frit may have the same size as that of the first outer electrode portion.

According to a third aspect of the invention, an LCD device includes a support case with a support frame having a window, an LCD panel provided in the support case to display images using incident light, and a surface light source unit to emit light to the LCD panel. The surface light source unit includes a first substrate and a second substrate, a discharge portion formed between the first substrate and the second substrate, a first outer electrode portion disposed on the first substrate outside the discharge portion to be supplied with power and a first frit disposed on the first substrate inside the discharge portion and opposite the first outer electrode portion. The discharge portion performs a discharge according to the power supplied to the first outer electrode portion. The first frit may comprise PbO.
These and/or other aspects and advantages of the invention will become apparent and more readily appreciated from the following description of the embodiments, taken in conjunction with the accompanying drawings of which:
Figure 1 illustrates a conventional surface light source unit;
Figure 2 is an exploded perspective view of an LCD device according to an embodiment of the present invention;
Figure 3 is a perspective view of a surface light source unit of the LCD device of Figure 2;
Figure 4 is a rear perspective view illustrating a rear side of a surface light source unit of the LCD device of Figure 2;
Figure 5 is a sectional view of the surface light source unit taken along line X-X' of Figure 3;
Figure 6 illustrates an electrode of a surface light source unit according to an embodiment of the present invention;
Figure 7 illustrates an electrode of a surface light source unit according to another embodiment of the present invention;
Figure 8 illustrates frits that are adhered to upper and lower substrates of a surface light source unit according to an embodiment of the present invention;
Figure 9 illustrates a difference between an energy distribution of the conventional surface light source unit of Figure 1 and an energy distribution of a surface light source unit according to an embodiment of the present invention; and
Figure 10 illustrates a difference between an electric field distribution of the conventional surface light source unit of Figure 1 and an electric field distribution of a surface light source unit according to an embodiment of the present invention.

In the following detailed description, wherever possible, the same reference numbers will be used throughout the drawings to refer to the same or like parts.

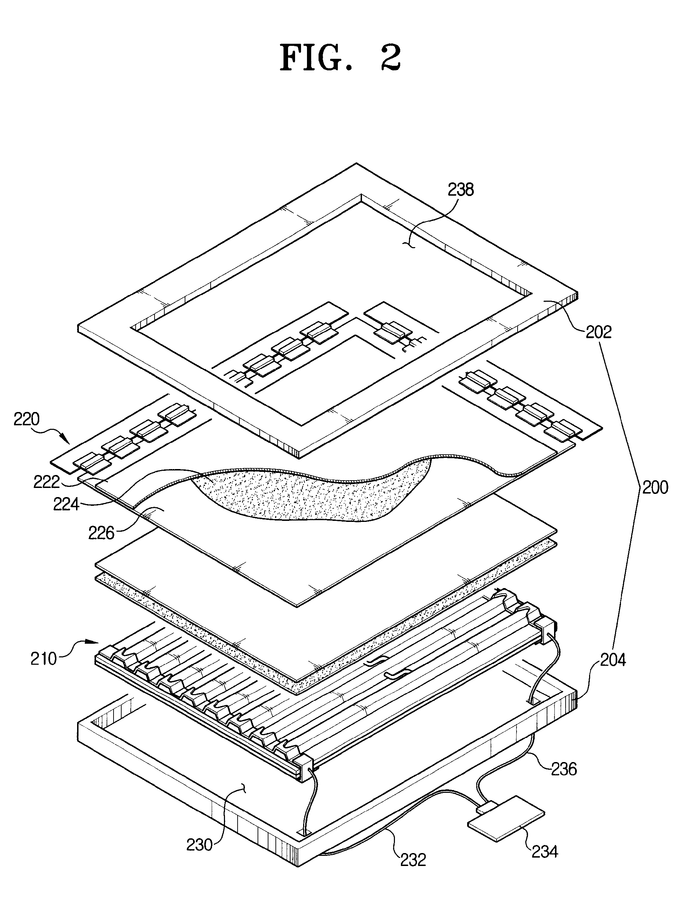

Figure 2 is an exploded perspective view of an LCD device according to an embodiment of the present invention.

The LCD device of Figure 2 includes a surface light source unit 210, a LCD panel 220 and a support case 200.

The support case 200 includes a case body 204 to receive the surface light source unit 210 and the LCD panel 220, and a support frame 202 provided on the case body 204 to cover edges of the surface light source unit 210 and the LCD panel 220. The support frame 202 has a quadrangular shape and is provided with a window 238.

The surface light source unit 210 is received in a receiving portion 230 of the case body 204. Technical features of the surface light source unit 210 are described in more detail below. The surface light source unit 210 is connected with an outer power source 234 via power supply lines 232 and 236.

The LCD panel 220 includes a thin film transistor (TFT) substrate 226, a colour filter substrate 222 formed to oppose the TFT substrate 226, and a liquid crystal 224 interposed between the TFT substrate 226 and the colour filter substrate 222. The LCD panel 220 converts light emitted from the surface light source unit 210 into image light conveying image data.

Since the LCD panel 220 is susceptible to impact from external objects, its four weak portions are protected by the support frame 202 so that they may not be detached.

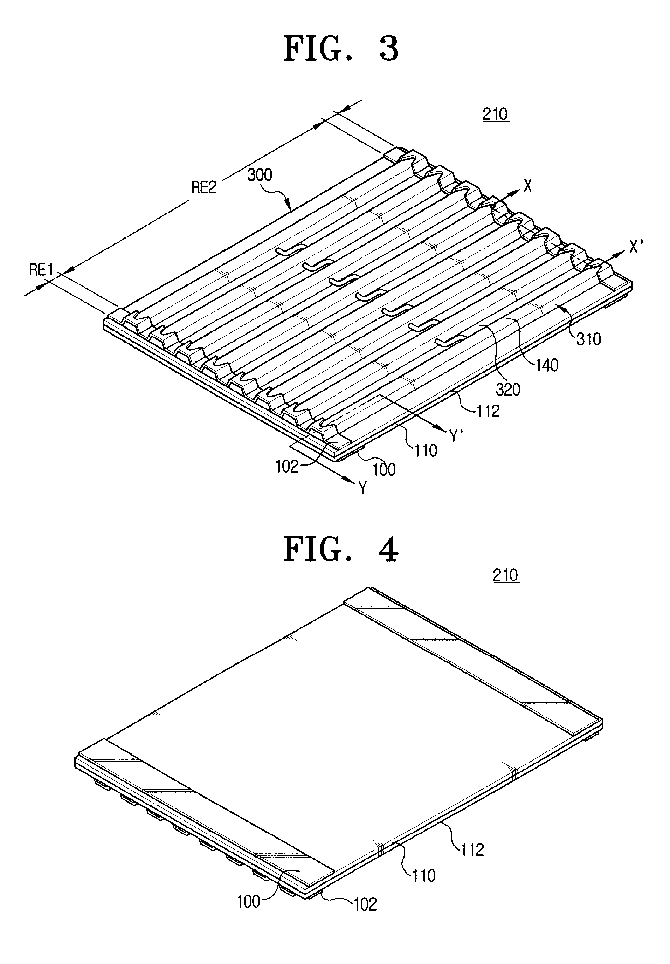

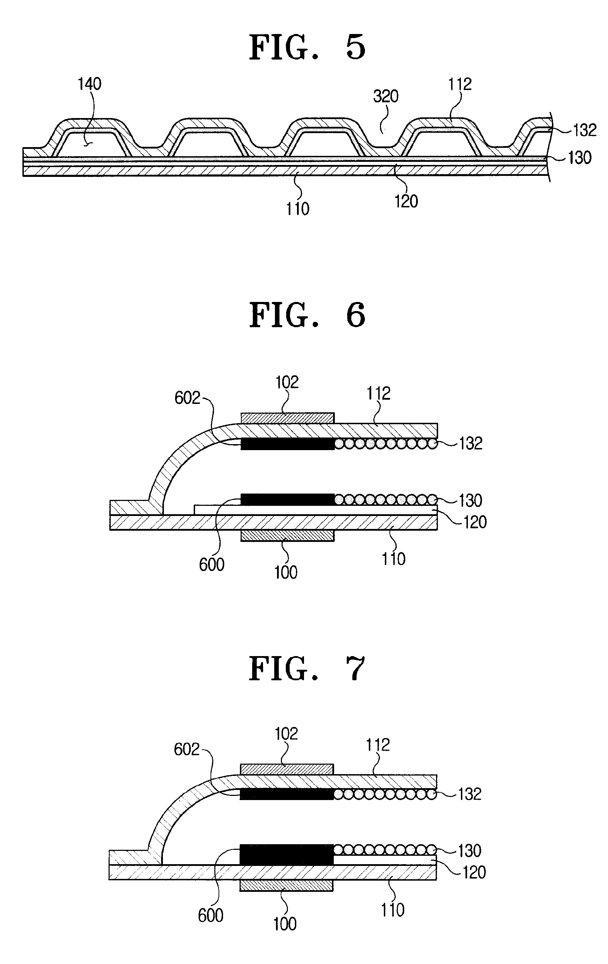

Figure 3 is a perspective view illustrating the surface light source unit 210 of the LCD device of Figure 2, Figure 4 is a perspective view illustrating a rear side of the surface light source unit 210 of the LCD device of Figure 2, and Figure 5 is a sectional view of the surface light source unit 210 taken along line X-X' of Figure 3. Referring to Figures 3 and 4, the surface light source unit 210 includes a surface light source body 300 and first and second outer electrode portions 100 and 102 provided at first and second ends of the surface light source body 300 respectively.

The surface light source body 300 includes first and second substrates 110 and 112 having bottom and top surfaces. The first substrate 110 has a flat shape. The first substrate 110 may be formed of a transparent glass substrate that transmits visible light and blocks ultraviolet light. Alternatively, the first substrate 110 may be formed of another transparent material.

Referring to Figure 5, a reflecting layer 120 and a first fluorescent layer 130 are deposited on the first substrate 110. The second substrate 112 is spaced apart from the first substrate 110 and has a non-flat shape to form a plurality of discharge chambers 140 and a plurality of chamber partitions 320. The discharge chambers 140 also have a non-flat shape. In the arrangement shown in Figure 5, the second substrate 112 has a longitudinal section with a plurality of semi-elliptical shapes that are similar to a trapezoid and connected together to form a series of the discharge chambers 140 and chamber partitions 320. However, it is not essential that form of the longitudinal section of the second substrate 112 is is based on a semi-elliptical shape. The longitudinal section of the second substrate 112 may be based on other shapes, such as a semicircle, a triangle, or a quadrangle.

Referring to Figures 3 and 5, the plurality of discharge chambers 140 and the plurality of chamber partitions 320 constitute a discharge portion 310. A second fluorescent layer 132, having a predetermined thickness, is deposited on the second substrate 112. In other words, the discharge chambers 140 are formed by the first fluorescent layer 130 and the second fluorescent layer 132, which face one another. The chamber partitions 320 are formed between the respective discharge chambers 140 to partition the discharge portion 310.

The second substrate 112 may be formed of a transparent glass substrate similar to the first substrate 110. Alternatively, the second substrate 112 may be formed of another transparent material.

Referring to Figure 5, the chamber partitions 320 are formed by closely adhering the second fluorescent layer 132 on the second substrate 112 to the reflecting layer 120 on the first substrate 112. Air in the discharge chambers 140 is then removed to provide a vacuum. A discharge gas, used to generate a plasma discharge, is then injected into the discharge chambers 140. The pressure of the discharge gas differs from atmospheric pressure, so that the second fluorescent layer 132 closely adheres to the reflecting layer 120.

The first fluorescent layer 130 and the second fluorescent layer 132 emit visible light in response to incident ultraviolet light generated by plasma discharge in the discharge chambers 140. The reflecting layer 120 reflects the visible light rays generated by the first fluorescent layer 130 and the second fluorescent layer 132 onto the second substrate 112 and prevents the visible light rays from leaking through the first substrate 110.

Referring to Figure 3, the discharge portion 310 of the surface light source body 300 includes a first region RE1 that is covered by the support frame 202 and is not externally exposed, and a second region RE2 that is not covered by the support frame 202 and corresponds to the window 238. The second region RE2 of the discharge portion 310 forms an effective light-emitting region where visible light is emitted as a result of the plasma discharge in the discharge portion 310 of the surface light source body 300.

The second outer electrode portion 102 is formed at both ends of an upper portion of the second substrate 112 and corresponds with the first outer electrode portion 100 so that an electric potential can be generated therebetween. Specifically, the second outer electrode portion 102 corresponds to the first region RE1 and extends across the discharge portion 310.

Figure 6 is a sectional view of the surface light source unit taken along line Y-Y' of Figure 3 according to an embodiment of the present invention. Referring to Figure 6, the surface light source unit includes a first outer electrode portion 100, a first substrate 110, a reflecting layer 120, a first fluorescent layer 130, a second fluorescent layer 132, a second substrate 112 and a second outer electrode portion 102, as described above in relation to the previous embodiment, together with secondary electron emission portions, in the form of a first frit 600 and a second frit 602. The first fluorescent layer 130 is deposited on a region adjacent to where the first frit 600 is deposited.

The first frit 600 is deposited on the reflecting layer 120 and may be the same size as the first outer electrode portion 100. Alternatively, the first frit 600 may be larger than the first outer electrode portion 100. In this example, the right hand edge of the first frit 600, when viewed in the orientation depicted in Figure 6, is aligned with an edge of the first outer electrode portion 100. The left hand edge of the first frit 600 may or may not be aligned with the other edge of the first outer electrode portion 100.

The first frit 600 may be formed of a material containing lead oxide (PbO). The first frit 600 containing PbO may have a thickness of 100 micrometers (µm) or less. PbO has a secondary electron emission coefficient that is several times greater than that of glass, but has low intensity. When PbO is mixed with glass, a softening temperature decreases to 450°C and a high level of adhesion between PbO and glass can be obtained. In addition to PbO, the first frit 600 may also contain an alkali metal oxide such as MgO, BaO, CeO, and SrO. Accordingly, the number of secondary emitting electrons produced, based on the same power, can be increased.

Secondary emitting electrons are produced as a result of interaction between the material of the first frit 600 and/or the second frit 602 and the visible light produced by the first fluorescent layer 130 and/or the second fluorescent layer 132. In other words, the first and second fluorescent layers 130 and 132 emit a primary light and the first and second frits 600 and 602 emit secondary light, in response to the primary light. The increased number of secondary electrons can minimize the effect of "dark portions" as discussed above in relation to the prior light source unit of Figure 1.

The second frit 602 is deposited on the bottom surface of the second substrate 112, and be the same size as the second outer electrode portion 102. Alternatively, the second frit 602 may be larger than the second outer electrode portion 102. The second frit 602 may be made of the same material as that of the first frit 600.

Figure 7 is a sectional view of a surface light source unit 210 according to another embodiment of the invention, corresponding to a view taken along line Y-Y' of Figure 3. The surface light source unit 210 includes the first outer electrode portion 100, the first substrate 110, the reflecting layer 120, the first fluorescent layer 130, the second fluorescent layer 132, the second substrate 112, the second outer electrode portion 102, the first frit 600 and the second frit 602. In this embodiment, the second frit 602 of Figure 7 is deposited in the same manner as discussed above in relation to Figure 6. However, the first frit 600 in the surface light source unit 210 of Figure 7 is deposited in a different manner, as will now be explained.

In the embodiment of Figure 7, the first frit 600 is deposited on the first substrate 110, instead of being deposited on the reflecting layer 120. Thus, the area of the reflecting layer 120 is decreased, when compared with the equivalent layer in the embodiment of Figure 6. Additionally, as illustrated in Figure 7, the first frit 600 may have a deposition thickness that is greater than that of the second frit 602.

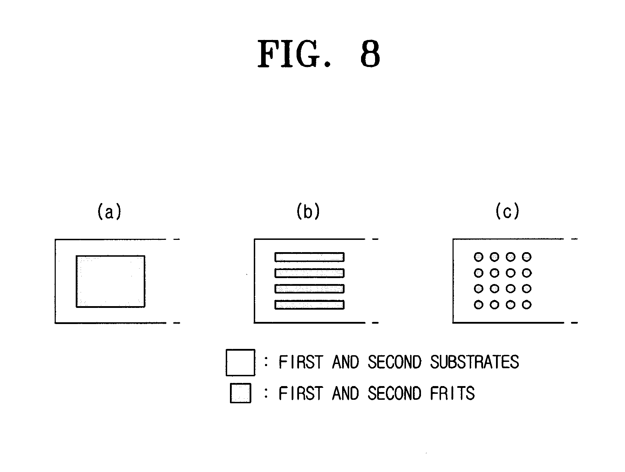

Figure 8 illustrates a structure of the first frit 600 deposited on the first substrate 100 and the second frit 602 deposited on the second substrate 112 according to various embodiments of the present invention. In Figure 8(a), a rectangular region is defined on the first substrate 110 and/or the second substrate 112, and the first frit 600 and/or the second frit 602 deposited to fill the defined rectangular region. In Figure 8(b), a plurality of rectangular regions, which are spaced apart by a predetermined width interval, are defined on the first substrate 110 and/or the second substrate 112. The first frit 600 and/or the second frit 602 are deposited on the defined rectangular regions. In Figure 8(c), a plurality of circular regions are defined on the first substrate 110 and/or the second substrate 112. The first frit 600 and the second frit 602 are then deposited on the defined plurality of circular regions.

Although Figure 8 illustrates only three types of deposition structures, first and second frits 600, 602 having other types of deposition structures may alternatively be used.

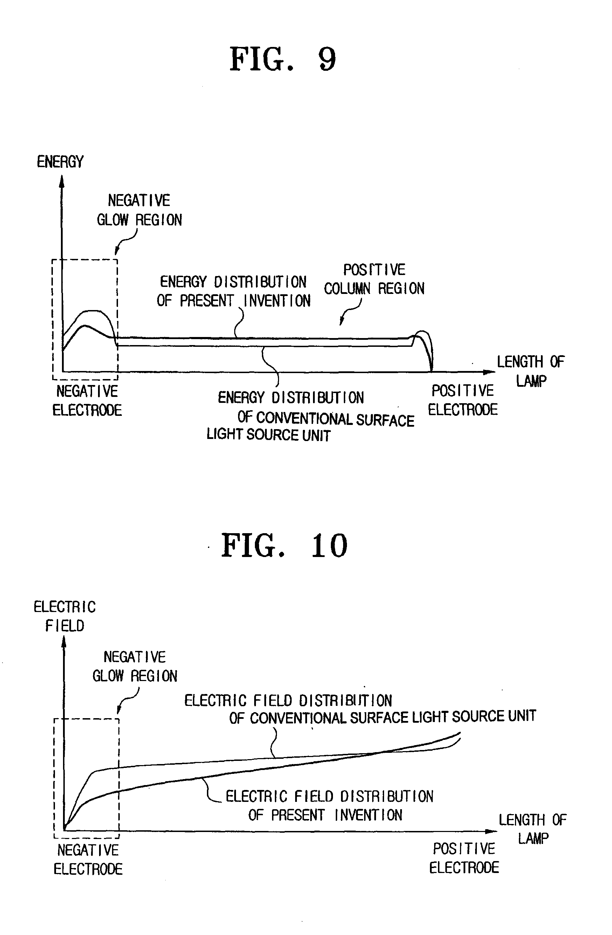

Figure 9 illustrates the energy distribution of the conventional surface light source unit of Figure 1 and the energy distribution of a surface light source unit 210 according to an embodiment of the present invention. Meanwhile, Figure 10 illustrates the electric field distributions of the conventional surface light source unit of Figure 1 and a surface light source unit 210 according to an embodiment of the present invention.

When a voltage is applied to a discharge portion of the surface light source unit according to an embodiment of the present invention, the discharge portion is divided into a negative glow region and a positive column region. In the negative glow region, ultraviolet rays that excite a fluorescent substance occur in a small energy range and energy consumption is high. For this reason, the negative glow region is dark and generates much heat. However, in the embodiment, the number of the secondary electrons in the negative glow region is increased, relative to that produced in the conventional surface light source unit. As a result, the energy consumption is decreased in comparison with that of the conventional surface light source unit. Thus, surplus energy from the negative glow region is used in the positive column region and the number of the secondary electrons emitted increases, thereby increasing light efficiency.

Generally speaking, an electric field is proportional to energy. Referring to the negative glow region of Figure 10, the electric field of the surface light source unit of the embodiment is smaller than that of the conventional surface light source unit. In other words, less energy is consumed in the negative glow region of the embodiment when compared with the conventional surface light source unit of Figure 1.

In addition, a discharge ageing process can be performed to further increase the number of secondary electrons emitted. The discharge ageing process enables normal lighting by removing impurities in a vicinity of the fluorescent substance or the electrode in the discharge chambers. An alkali metal oxide contained in a frit is mixed with water in the air during a manufacturing process of the LCD device. The mixture is hardened to form impurities on a surface of the frit. The surface light source unit is driven at high current for a certain amount of time to remove the impurities. The frit, which has a high secondary electron emission coefficient, is exposed at an outer wall of the discharge chambers as the impurities are removed by driving the surface light source unit at the high current.

As described above, since the frit is formed at the outer wall of the discharge chambers, the number of the secondary electrons emitted is increased and the dark portion that may be generated around a perimeter of the surface light source unit can be minimized. This can result in an enlargement of the effective light-emitting region of the surface light source unit. Therefore, the uniformity of the luminance of light emitted from the surface light source unit can be improved to enhance display quality.

Although a few embodiments of the present general inventive concept have been shown and described hereinabove, it will be appreciated by those skilled in the art that changes may be made in these embodiments without departing from the principles of the invention, the scope of which is defined in the appended claims.

## Claims

1. A surface light source unit (210) comprising:
a discharge portion (140) formed between first and second substrates (110, 112); and
first and second electrodes (100, 102) mounted on said first and second substrates (110, 112) respectively and arranged to apply a voltage to said discharge portion (140) so as to cause a plasma discharge therein;
**characterised by**:
at least one secondary light generation means (602) provided within said discharge portion (140) and arranged to respond to incident light generated within the discharge portion (140) by causing the generation of secondary light, wherein one of said first and second electrodes (100, 102) and said secondary light generation means (602) are located on opposite faces of one of the first and second substrates (112) and the position of the secondary light generation means (602) overlaps the position of the position of said one of said first and second electrodes (102).

2. A surface light source unit (210) according to claim 1, wherein said secondary light generation means (602) is configured to respond to said incident light by emitting electrons.

3. A display apparatus comprising:
a display panel (220); and
a surface light source unit (210) according to claim 1 or 2.

4. A surface light source unit usable with an LCD device, comprising:
a first substrate and a second substrate;
a discharge portion formed between the first substrate and the second substrate;
a first outer electrode portion disposed on the first substrate outside the discharge portion to be supplied with power; and
a first frit disposed on the first substrate inside the discharge portion and opposite the first outer electrode portion,
wherein the discharge portion performs a discharge according to the power supplied to the first outer electrode portion.

5. The surface light source unit of claim 4, further comprising:
a second frit disposed on the second substrate inside the discharge portion across from the first frit; and
a second outer electrode portion disposed on the second substrate outside the discharge portion and opposite the second frit.

6. The surface light source unit of claim 5, further comprising:
a first fluorescent layer disposed along a length of the discharge portion on an inner bottom surface thereof and extending to the first frit; and
a second fluorescent layer disposed along the length of the discharge portion on an inner top surface thereof and extending to the second frit.

7. The surface light source unit of claim 5, wherein the first frit and the second frit have sizes that correspond to sizes of the first outer electrode portion and the second outer electrode portion, respectively.

8. The surface light source unit of claim 5, wherein at least one of the first and second frits comprises PbO.

9. The surface light source unit of claim 5, further comprising:
a reflecting layer disposed between the first substrate and the first frit.

10. The surface light source unit of claim 5, wherein the first and second frits contain an alkali metal oxide.

11. The surface light source unit of claim 10, wherein the alkali metal oxide comprises one of MgO, BaO, CeO, and SrO.

12. The surface light source unit of claim 5, wherein the first and second frits each have a thickness of 100µm or less.

13. The surface light source unit of claim 5, wherein the first and second frits comprise one of a rectangular structure, a straight line patterned structure, and a one-dimensional repeated shape structure.

14. The surface light source unit of claim 5, wherein the first frit has the same size as that of the first outer electrode portion.

15. A surface light source unit usable with an LCD device, comprising:
a transparent body having at least one hollow discharge chamber;
a first electrode disposed on a first outer surface of the transparent body along at least one end thereof to create an electrostatic potential in the at least one discharge chamber to produce a gas discharge so that a primary light is generated; and
a secondary electron emitting part disposed on an inner surface of the at least one discharge chamber and at an end thereof to emit a secondary light in response to the primary light.

16. The surface light source unit of claim 15, wherein the transparent body has a plurality of longitudinal discharge chambers each including:
at least one fluorescent layer disposed therein to emit the primary light in response to ultraviolet light produced by the gas discharge;
a reflecting layer disposed between an inner surface of the respective discharge chamber and the at least one fluorescent layer to direct the primary light toward an output surface of the transparent body; and
the first electrode and a second electrode disposed on top and bottom surfaces of ends of the plurality of longitudinal discharge chambers, and the secondary light emitting part includes first and second frits disposed adjacent to the at least one fluorescent layer on an inner surface of the plurality of longitudinal discharge chambers.

17. The surface light source unit of claim 15, further comprising:
a fluorescent light unit disposed inside the at least one discharge chamber to emit the primary light in response to ultraviolet rays generated by the plasma discharge.

18. The surface light source unit of claim 15, wherein the first electrode is disposed at both longitudinal ends of the transparent body, and the transparent body has a flat rectangular shape having a light emitting region and a non-light emitting region that corresponds to the first electrode.

19. The surface light source unit of claim 18, further comprising:
a second electrode disposed at both longitudinal ends of the transparent body on a second outer surface thereof that is opposite to the first outer surface such that the first and second electrodes have the at least one discharge chamber disposed therebetween.

20. The surface light source unit of claim 18, wherein the secondary electron emitting part is disposed in the non-light emitting region of the transparent body to emit secondary electrons.

21. The surface light source unit of claim 15, wherein the first electrode creates a non-light emitting region in an output surface of the transparent body, and the secondary electron emitting part is disposed in the non-light emitting region.

22. A surface light source unit usable with an LCD device, comprising:
a transparent body having at least one chamber;
a primary light emitting part to generate primary light according to a predetermined voltage applied to the at least one chamber;
one or more electrodes disposed at predetermined locations on a surface of the transparent body such that transparent body has a light emitting portion and a non-light emitting portion that is blocked by the one or more electrodes; and
a secondary light emitting part disposed inside the transparent body at the predetermined locations to generate a secondary light in response to the primary light.

23. The surface light source unit of claim 22, wherein the primary light emitting part comprises a fluorescent layer disposed on an inner surface of the at least one chamber in the light emitting portion of the transparent body to transmit visible light in response to ultraviolet light produced by a gas discharge, and the secondary light emitting part comprises one or more frits disposed inside the at least one chamber beneath the one or more electrodes to emit secondary electrons in the non-light emitting portion of the transparent body.

24. A surface light source unit usable with an LCD device, comprising:
a plurality of gas discharge chambers each comprising:
a first electrode disposed at an end thereof on an outer bottom surface;
a second electrode disposed at the end thereof on an outer top surface;
a reflecting layer disposed on an inner bottom surface thereof;
at least one fluorescent layer disposed on at least one of the reflecting layer and
an inner top surface thereof; and
at least one frit disposed adjacent to the at least one fluorescent layer.

25. The surface light source unit of claim 24, wherein the plurality of gas discharge chambers are formed by a first transparent substrate having a flat shape and a second substrate having a periodic non-flat shape adhered to the first substrate to define the plurality of gas discharge chambers and a plurality of chamber partitions disposed between respective gas discharge chambers.

26. The surface light source unit of claim 25, wherein the first and second transparent substrates transmit visible light and block ultraviolet light.

27. A surface light source unit usable with an LCD device, comprising;
a transparent body having a light emitting region and a blocked non-light emitting region; and
at least one secondary light emitting unit disposed in the blocked non-light emitting region to emit secondary light in response to primary light emitted in the lighting emitting region.

28. The surface light source unit of claim 27, wherein the transparent body has a rectangular shape including a plurality of longitudinal discharge chambers and at least one electrode that causes the blocked non-light emitting region around a perimeter of the transparent body.

29. The surface light source unit of claim 28, wherein the plurality of longitudinal discharge chambers contain a plasma gas to emit ultraviolet light when a voltage applied to the at least one electrode exceeds a predetermined threshold.

30. The surface light source unit of claim 27, wherein the at least one secondary light emitting unit comprises a frit containing PbO.

31. The surface light source unit of claim 27, wherein, during operation, the transparent body comprises a gas discharge portion that is divided into a negative glow region that corresponds to the blocked non-light emitting region and a positive column region that corresponds to the light emitting region.

32. The surface light source unit of claim 31, further comprising:
at least one primary light emitting unit disposed in the light emitting region of the transparent body to emit the primary light,
wherein the secondary light emitted in the negative glow region reduces an amount of energy consumed by the primary light emitting unit.

33. An LCD device, comprising:
a support case including a support frame having a window;
an LCD panel provided in the support case to display images using incident light; and
a surface light source unit to emit light to the LCD panel, the surface light source unit including:
a first substrate and a second substrate,
a discharge portion formed between the first substrate and the second substrate,
a first outer electrode portion disposed on the first substrate outside the discharge portion to be supplied with power,
a first frit disposed on the first substrate inside the discharge portion opposite the first outer electrode portion, wherein the discharge portion performs a discharge according to the power supplied to the first outer electrode portion.

34. The LCD device of claim 33, wherein the surface light source unit further includes:
a second frit disposed on the second substrate inside the discharge portion and across from the first frit, and
a second outer electrode portion disposed on the second substrate outside the discharge portion and opposite the second frit.

35. The LCD device of claim 34, wherein at least one of the first and second frits comprise PbO.

36. The LCD device of claim 34, wherein the surface light source unit further includes a reflecting layer disposed between the first substrate and the first frit.

37. The LCD device of claim 34, wherein the first and second frits contain an alkali metal oxide.
